# FASCICULE DE BREVET EUROPEEN

(11) **EP 4 069 533 B1**
(45) Date de publication et mention de la délivrance du brevet: **16.09.2026**
(21) Numéro de dépôt: 20816563.9
(22) Date de dépôt: 10.11.2020
(51) Int. Cl.: B60H 1/00

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR-CONDITIONING DEVICE FOR A MOTOR VEHICLE

(30) Priorité: 04.12.2019 FR 1913713
(43) Date de publication de la demande: 12.10.2022
(73) Titulaire: Valeo Electrification, 95892 Cergy Pontoise (FR)
(72) Inventeur: PIERRES, Philippe, 78320 LE MESNIL SAINT-DENIS (FR); BARBIER, Thierry, 78320 LE MESNIL SAINT-DENIS (FR); VAN SCHAMMELHOUT, Cédric, 78320 LE MESNIL SAINT-DENIS (FR); UMMIDI, Naveenkumar, Chennai, Tamil Nadu 600130 (IN)
(74) Mandataire: Valeo Powertrain Systems
(86) Numéro de dépôt international: PCT/FR2020/052046
(87) Numéro de publication internationale: WO 2021/111047

(56) Documents cités:
- EP-A1- 1 790 509
- EP-A1- 2 119 582
- DE-A1- 102008 007 074
- FR-A3- 2 965 219
- JP-A- H10 250 342
- US-B1- 6 296 303

## Description

L'invention concerne le domaine des dispositifs de chauffage, ventilation et/ou climatisation pour véhicule automobile ainsi qu'un véhicule automobile comprenant un tel dispositif.

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

De façon connue, le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un radiateur, éventuellement associé à un radiateur additionnel, qui est destiné à réchauffer le flux d'air qui le traverse.

Il est connu, dans ces dispositifs, d'avoir un évaporateur disposé en aval de l'entrée d'air, de sorte que la totalité du flux d'air entrant à l'intérieur du boîtier soit déshumidifié par l'évaporateur. Puis, le flux d'air froid ainsi généré est admis dans une chambre de mixage principale et/ou orienté vers un organe de chauffage, notamment un radiateur et éventuellement un radiateur additionnel, pour obtenir un flux d'air chaud. La chambre de mixage principale sert à mélanger un ou plusieurs flux d'air froid et/ou chaud de sorte que le flux d'air issu du mélange, ayant la température de consigne souhaitée, soit distribué vers des zones spécifiques de l'habitacle du véhicule automobile. La chambre de mixage principale est pourvue d'au moins un organe de mixage afin de définir la proportion du flux d'air froid et du flux d'air chaud issu de la chambre de chauffage pénétrant dans la chambre de mixage principale. Cet organe permet ainsi d'ajuster la température du flux d'air mélangé destiné à être distribué dans la(es) zone(s) dédiées de l'habitacle, comme par exemple les zones avant et arrière, ou gauche et droite dans l'habitacle du véhicule automobile.

Bien qu'un tel dispositif de chauffage, ventilation et/ou climatisation permette de réaliser une gestion aéraulique pour plusieurs zones du véhicule, il existe toutefois de nombreuses contraintes en termes de volume et de poids pour ces dispositifs. En effet, les dispositifs de chauffage, ventilation et/ou climatisation sont généralement disposés sous la planche de bord du véhicule automobile, ceci implique le rehaussement des planches de bord limitant ainsi la visibilité du conducteur.

En d'autres termes, le boîtier de l'installation de chauffage, ventilation et/ou climatisation est installé dans l'habitacle, entre une planche du bord du véhicule et une paroi, couramment appelée tablier ou pare feu, séparant l'habitacle du compartiment moteur du véhicule. Or, pour le confort des occupants du véhicule, il est souhaitable que l'espace intérieur de l'habitacle soit le plus vaste possible. En d'autres termes, pour maintenir un niveau de confort acceptable, il est souhaitable de réduire l'encombrement de certains composants, par exemple la planche de bord. Une telle réduction dimensionnelle rend alors impossible le positionnement d'une installation de chauffage, ventilation et/ou climatisation telle que connue de l'art antérieur.

Les documents EP1790509A1 et FR2965219 A3 présentent des boîtiers installés à travers le tablier séparant l'habitacle du compartiment moteur. Néanmoins, ces agencements ne sont pas optimisés.

La présente invention vise à optimiser l'encombrement d'un dispositif de chauffage, ventilation et/ou climatisation.

Pour cela, l'invention propose un dispositif de chauffage, ventilation et/ou climatisation pour véhicule automobile selon l'objet de la revendication 1.

De cette manière, l'invention permet d'avoir un dispositif de chauffage, ventilation et/ou climatisation moins encombrant que ceux de l'art antérieur. En effet, le fait d'agencer deux volets comprenant des portes coulissantes à des emplacements différents du dispositif de chauffage, ventilation et/ou climatisation permet de limiter de manière optimale la hauteur dudit dispositif et le fait d'agencer le boitier de part et d'autre d'une paroi

D'autres aspect selon l'invention sont décrits ci-dessous et peuvent être pris seul ou en combinaison.

Un aspect selon l'invention propose que le moyen de fixation correspond à deux éléments de formes complémentaire, un agencé sur le boitier et l'autre sur la paroi.

Un aspect selon l'invention propose que le moyen de fixation correspond à un deux éléments de formes complémentaire, un premier élément étant agencé sur le boitier et un second élément étant apte à être agencé sur la paroi.

Un autre aspect selon l'invention propose que le moyen de fixation correspond à un ensemble goujon et oreille.

Un autre aspect selon l'invention propose qu'un troisième échangeur de chaleur correspondant à un radiateur électrique est agencé en aval, par rapport à l'écoulement d'un flux d'air, du deuxième échangeur de chaleur, ledit troisième échangeur de chaleur comprenant une alimentation filaire.

Un autre aspect selon l'invention propose que le boitier comprend un logement dans lequel une extrémité de la paroi est apte à être accueillie et venir en butée contre le boitier.

Un deuxième volet de distribution comprenant une porte coulissante peut être agencé de manière à pouvoir obturer au moins partiellement un premier desdits conduits de sortie d'air.

Le deuxième volet de distribution peut être agencé de manière à pouvoir obturer le conduit d'air de sortie configuré pour guider le flux d'air vers une buse de ventilation.

Un premier volet de distribution comprenant un volet de type drapeau peut être agencé de manière à pouvoir obturer au moins partiellement un deuxième desdits conduits de sortie d'air.

Le deuxième conduit de sortie d'air peut être configuré pour guider un flux d'air vers une buse destiné à déboucher dans l'habitacle au niveau des pieds des passagers du véhicule.

Un troisième volet de distribution comprenant un volet de type papillon peut être agencé de manière à pouvoir obturer au moins partiellement un troisième desdits conduits de sortie d'air.

Le troisième conduit de sortie d'air peut être configuré pour guider un flux d'air vers la buse de dégivrage.

Le conduit de sortie d'air peut être défini d'une part par une paroi du boitier définissant le canal d'écoulement et d'autre part par une autre paroi externe agencée à l'extérieur du canal d'écoulement.

La buse peut être agencée en dessous du premier échangeur de chaleur par rapport à l'axe vertical Z.

Le boitier comprend une entrée d'air et ledit conduit de sortie d'air peut être agencé sur la partie du boitier opposée à ladite entrée d'air.

Le boîtier peut être de forme allongée dans lequel un pulseur, le premier et le deuxième échangeurs de chaleur sont alignés dans un axe transversal dudit boîtier, le premier et le deuxième échangeurs de chaleur étant alignés dans un axe longitudinal dudit boîtier.

L'invention concerne également un véhicule automobile comprenant un dispositif de chauffage, ventilation et/ou climatisation tel que décrit précédemment.

Le véhicule comprend un compartiment moteur et un compartiment habitacle séparés par un tablier comprenant une ouverture, le boitier étant fixé à une face du tablier, de manière à ce que deux échangeurs de chaleur sont agencés dans le compartiment moteur et ledit au moins un conduit de sortie d'air est agencé dans le compartiment habitacle

D'autres caractéristiques et avantages de l'invention ressortiront à la lecture de la description qui suit, en référence aux figures annexées, qui illustrent :
La [Fig. 1] illustre une vue en perspective du dispositif de chauffage, ventilation et/ou climatisation selon l'invention ;
La [Fig.2] illustre une vue de profil d'une partie du dispositif de chauffage, ventilation et/ou climatisation selon l'invention ;
La [Fig.3] illustre une vue en perspective d'une partie du dispositif de chauffage, ventilation et/ou climatisation ;
La [Fig. 4] illustre une vue en perspective l'agencement du dispositif de chauffage, ventilation et/ou climatisation selon l'invention au sein d'un véhicule automobile.

Les termes « amont » et « aval » sont toujours en référence par rapport à l'écoulement d'un flux d'air circulant au sein du dispositif de chauffage, ventilation et/ou climatisation

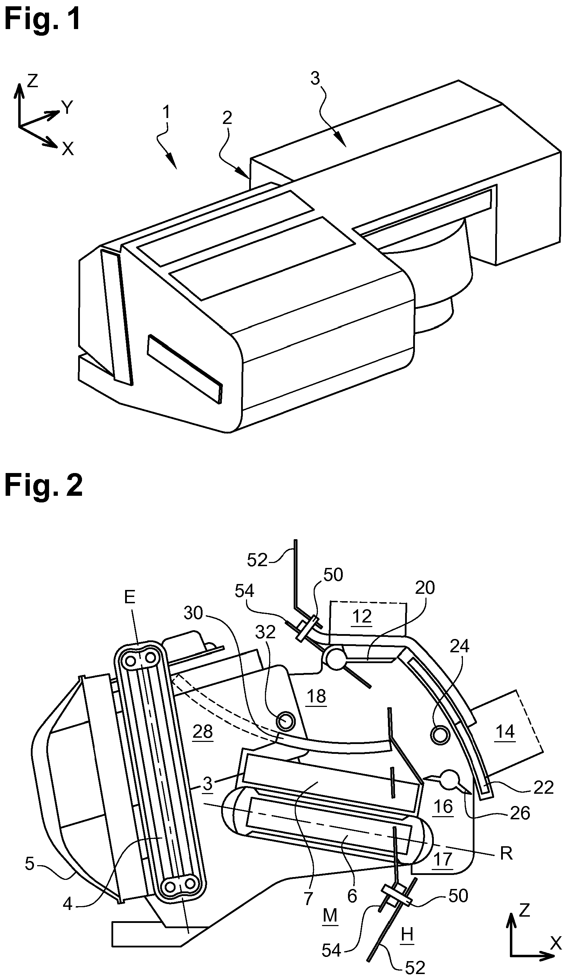

Sur les [Fig. 1] et [Fig. 2] est schématisé un trièdre XYZ où un axe longitudinal X du dispositif 1 de chauffage, ventilation et/ou climatisation peut correspondre à l'axe longitudinal avant/arrière du véhicule. Un axe transversal Y du dispositif 1 de chauffage, ventilation et/ou climatisation peut correspondre à l'axe transversal droite/gauche du véhicule, et un axe vertical Z du dispositif 1 de chauffage, ventilation et/ou climatisation peut correspondre à l'axe vertical haut/bas du véhicule, chaque axe étant perpendiculaire les uns aux autres notamment lorsque le dispositif 1 de chauffage, ventilation et/ou climatisation est installé dans le véhicule automobile.

Pour obtenir un dispositif de chauffage, ventilation et/ou climatisation avec un faible encombrement stérique vertical, l'invention telle qu'illustrée à la [Fig. 1], l'invention propose un dispositif 1 de chauffage, ventilation et/ou climatisation comprenant un boîtier 2 de forme allongée définissant un canal d'écoulement pour un flux air destiné à être distribué dans l'habitacle dans lequel sont logés des moyens de traitement thermique du flux d'air. Autrement dit, tel qu'illustré en [Fig. 2], le boitier 2 définit grâce à des parois 5 un canal d'écoulement 3, ou un conduit d'écoulement, pour véhiculer un flux d'air depuis une entrée d'air jusqu'à une sortie d'air.

Le boitier 2 définit à lui seul le canal d'écoulement 3, autrement dit, il n'y a pas d'autre élément qui se combine au boitier 2 pour définir une partie du canal d'écoulement 3. On peut aussi dire que le canal d'écoulement 3 est d'un seul tenant. Le boitier peut être monobloc (en une unique pièce), ou en plusieurs blocs ou module assemblés les uns aux autres, tout en définissant à eux seul le canal d'écoulement 3.

Les moyens de traitement thermique comprennent un premier échangeur de chaleur 4, par exemple un évaporateur, destiné à refroidir et déshumidifier l'intégralité du flux d'air circulant dans le canal d'écoulement 3.

Les moyens de traitement thermique comprennent également un deuxième échangeur de chaleur 6, exemple un radiateur, destiné à réchauffer une partie du flux d'air circulant dans le dispositif 1 de chauffage, ventilation et/ou climatisation, et est agencé en aval, par rapport à l'écoulement du flux d'air, du premier échangeur de chaleur 4.

Selon un mode de réalisation particulier, le deuxième échangeur de chaleur 6 est couplé à un troisième échangeur de chaleur 7 correspondant à un radiateur électrique additionnel, par exemple avec des barreaux CTP (Coefficient de Température Positif). On peut aussi parler d'une PTC HV pour « Positif Temperature Coefficient High Voltage ». Le troisième échangeur de chaleur 7 est destiné à réchauffer le flux d'air de manière plus rapide, notamment lors du démarrage du véhicule.

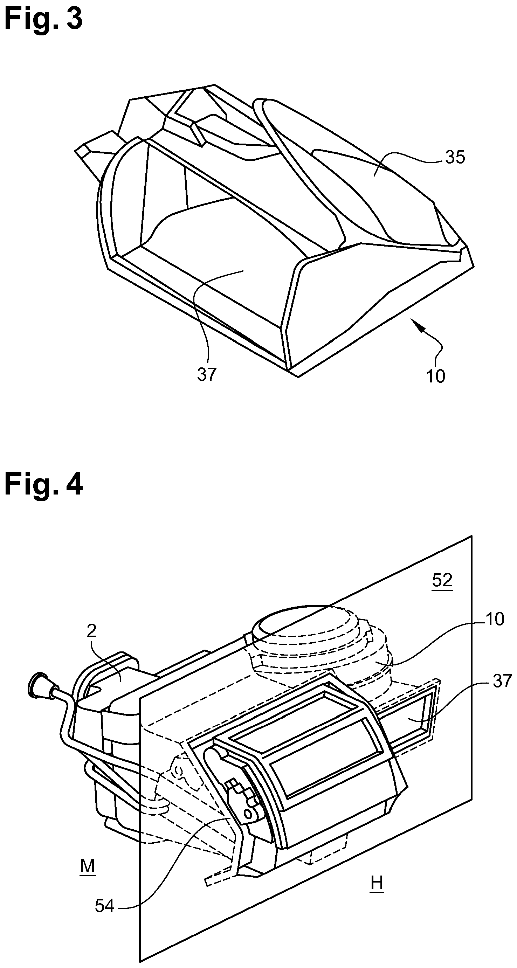

Le flux d'air est introduit dans le boîtier 2 par l'intermédiaire d'au moins une entrée d'air 10 puis est dirigé par l'intermédiaire d'un pulseur qui comprend pour cela un moteur et une roue à pales. Le pulseur achemine le flux d'air depuis l'entrée d'air 10 jusqu'à au moins une sortie, après avoir que celui-ci ait été traité thermiquement par les échangeurs de chaleur 4, 6. L'entrée d'air 10 correspond à un boitier d'entrée d'air comprenant deux ouvertures, une entrée d'air extérieur 35 et une entrée d'air de recyclage 37 comme illustré en [Fig. 3].Un volet peut être agencé entre les deux ouvertures pour obturer au moins partiellement chacune. L'entrée d'air 10 est agencée sur la partie supérieure par rapport à l'axe vertical Z du dispositif de chauffage, ventilation et/ou climatisation.

La sortie comprend plusieurs conduits de sortie illustrés en [Fig. 2] distribuant les flux d'air vers des buses débouchant dans différentes régions de l'habitacle. Chaque conduit de sortie d'air comprend une bouche correspondant à l'entrée du conduit de sortie d'air. La sortie comprend notamment un premier conduit de sortie d'air 12 configuré pour mener le flux d'air vers la buse de dégivrage permettant ainsi de désembuer le pare-brise. La sortie comprend en outre un deuxième conduit de sortie d'air 14 apte à amener le flux d'air vers la buse de ventilation latéraux/centraux permettant ainsi de refroidir/réchauffer les passagers du véhicule. Enfin, la sortie comprend un troisième conduit de sortie d'air 16 orientant le flux d'air vers la buse pied permettant de refroidir/réchauffer les pieds des passagers avant du véhicule.

Selon un mode de réalisation particulier non illustré, le troisième conduit de sortie d'air 16 peut présenter une forme particulière où le conduit longe le canal d'écoulement 3 en partie inférieure, par rapport à l'axe vertical Z du dispositif 1 de chauffage, ventilation et/ou climatisation. On peut aussi dire que le conduit de sortie d'air 16 est agencé sur la partie du boitier 2 opposée à l'entrée d'air 10, ou que le conduit de sortie d'air 16 longe la surface inférieure, ou externe, du boitier 2 du dispositif 1 de chauffage, ventilation et/ou climatisation, plus précisément le conduit de sortie d'air 16 longe la surface inférieure de la paroi 5 du boitier 2 définissant le canal d'écoulement 3. La paroi 5 comprend une surface interne définissant un volume interne correspondant au canal d'écoulement 3 et une surface externe agencé à l'extérieur du canal d'écoulement 3, le conduit de sortie d'air 16 longe la surface externe de ladite paroi 5.

Comme illustré en [Fig. 2], chaque conduit de sortie d'air 12, 14, 16 s'étend depuis une chambre de mixage 18 qui sera décrite ultérieurement jusqu'à une buse, correspondant à la sortie de chaque conduit 12, 14, 16, débouchant dans les différentes zones de l'habitacle.

Un volet de distribution est agencé au niveau de chaque bouche, ou entrée, des conduits de sortie d'air 12,14, 16. Chaque volet de distribution est configuré pour passer d'une configuration où il obture intégralement chaque entrée de conduit de sortie d'air à une configuration où il permet le flux d'air de circuler intégralement au sein du conduit de sortie d'air correspondant. Bien évidemment, chaque volet de distribution est apte à adopter toute position intermédiaire.

Un premier volet de distribution 20 de type drapeau, correspondant à une porte avec un arbre de rotation agencée à une des extrémités de la porte, est agencé au niveau de l'entrée du premier conduit de sortie d'air 12. Un deuxième volet de distribution 22 de type coulissant aussi connu sous le nom anglais « sliding door », correspondant à une porte coulissante sur laquelle est agencée au moins une crémaillère. Afin de mettre le deuxième volet de distribution 22 en mouvement, au moins un engrenage 24 complémentaire à la crémaillère est mis en rotation autour d'un axe par un actionneur non illustré. La rotation de l'engrenage 24 entraîne le mouvement en translation de la porte coulissante 22 entre deux positions extrêmes, une première position extrême où le deuxième volet de distribution 22 obture la bouche d'entrée du deuxième conduit de sortie d'air 14 et une seconde position extrême où le deuxième volet de distribution 22 permet au flux d'air froid issu de la chambre de mixage 18 d'accéder au sein du deuxième conduit de sortie d'air 14. Un troisième volet de distribution 26 papillon, correspondant à un volet avec un arbre de rotation et une ou deux pales agencées de part et d'autre de l'arbre de rotation, est agencé au niveau de l'entrée du troisième conduit de sortie d'air 16 et permet d'obturer ou non le troisième conduit de sortie d'air 16.

Comme illustré en figure 2, le deuxième volet de distribution 22 n'est pas plan, autrement dit ladite porte coulissante est incurvée, ou de forme concave, et adopte une trajectoire courbée. On peut également dire que la deuxième porte coulissante 22 s'inscrit dans une pluralité de plans. Il est entendu que la porte coulissante est mobile selon une direction qui n'est pas plane. La deuxième porte coulissante coulisse dans des rails et ces rails sont inscrits dans une pluralité de plans. On peut également dire que la trajectoire du premier volet de distribution est incurvée, la trajectoire correspondant à la courbe décrite par le volet en mouvement.

Le premier échangeur de chaleur 4 comprend deux chambres collectrices et un faisceau thermique comprenant un ensemble de tubes ou plaques et on considère ici que le faisceau thermique définit un plan E. Le deuxième échangeur de chaleur 6 comprend deux chambres collectrices et un faisceau thermique comprenant un ensemble de tubes ou plaques et on considère ici que le faisceau thermique définit un plan R. Le troisième échangeur de chaleur 7 s'étend dans un plan parallèle au plan R afin de pouvoir accoler, ou assujettir, le troisième échangeur de chaleur 7 au deuxième échangeur de chaleur 6.

Afin de gagner en hauteur, le deuxième échangeur de chaleur 6 est inscrit dans un plan R qui est orthogonal au plan de l'entrée d'air de la volute. En se référant par rapport aux véhicule, le plan E du premier échangeur de chaleur 4 correspond sensiblement au plan définit par les axes transversal et vertical YZ du véhicule tandis que le plan R du deuxième échangeur de chaleur 6 correspond sensiblement au plan définit par les axes longitudinal et transversal XY du véhicule. Autrement dit, le deuxième échangeur de chaleur 6 est agencé sensiblement à l'horizontal par rapport au dispositif 1 de chauffage, ventilation et/climatisation ou encore par rapport au véhicule une fois à l'état installé. Ceci permet donc un gain considérable en hauteur.

Selon l'invention, les premier et deuxièmes échangeur de chaleur 4,6 sont inscrits dans des plans sensiblement orthogonaux, et plus particulièrement dans des plans orthogonaux.

Selon l'invention, le dispositif 1 comprend un conduit d'évacuation permettant de guider les condensats vers l'extérieur du boitier 2. Afin de réduire la hauteur du dispositif, le conduit d'évacuation est de forme aplatie et s'étend dans une direction sensiblement parallèle au plan R du deuxième échangeur de chaleur 6. En d'autres termes, le conduit d'évacuation présente un canal d'écoulement ayant une section de forme oblongue ou toute autre forme dont la largueur dépasse la hauteur telle que elliptique, rectangulaire, *etc.*

Le flux d'air entrant au sein du boitier est véhiculé depuis l'entrée d'air 10 à travers une volute correspondant à une partie du boitier en spirale. La volute présente une entrée d'air correspondant à un orifice présent au sein du boitier, aussi appelé carter, en spirale. La volute présente une évolution radiale en partant d'un point N appelé le nez de la volute, sur une gamme d'angle pouvant aller de 0° à 360°. La volute présente ensuite une sortie de volute ayant la forme d'un conduit rectiligne de manière à ce que le flux d'air sortant de la volute suive cette même forme. Le flux d'air débouche alors dans une partie appelée le divergent qui correspond à une partie du canal d'écoulement 3 rectiligne ayant un agrandissement en hauteur selon l'axe Z. Le flux d'air s'écoule à travers le divergent jusqu'au premier échangeur de chaleur 4.

Une fois que le flux d'air a été refroidi par le premier échangeur de chaleur 4, il est guidé au sein du canal d'écoulement 3 vers le deuxième échangeur de chaleur 6. Selon le mode de réalisation illustré à la [Fig. 2], pour garantir que le flux d'air froid, issu du premier échangeur de chaleur 4, ne soit pas thermiquement contaminé par le deuxième échangeur de chaleur 6, le dispositif 1 comprend en un chemin de contournement 28 du deuxième échangeur de chaleur 6. Ainsi, le flux d'air froid, ayant traversé le premier échangeur de chaleur 4, circule soit à travers le deuxième échangeur de chaleur 6 pour être réchauffé, soit contourne le deuxième échangeur de chaleur 6 par le chemin de contournement 28 afin de conserver sa basse température.

Les flux d'air chaud et froid sont alors orientés en direction d'une zone de mixage 18 pour y être mélangés et distribués vers les bouches, ou entrées, des conduits de sortie 12,14,16 aux températures consignées. Pour réaliser ce mélange dans des proportions variables, le dispositif 1 comprend un volet de mixage 30 permettant de réguler la proportion de flux d'air froid passant par le deuxième échangeur de chaleur 6 et la proportion de flux d'air froid passant par le chemin de contournement 28.

Le volet de mixage 30 correspond à un volet de type coulissant, c'est-à-dire qu'il comprend une porte coulissante sur laquelle est agencée au moins une crémaillère. Afin de mettre le volet de mixage 30 en mouvement, au moins un engrenage 32 complémentaire à la crémaillère est mis en rotation autour d'un axe par un actionneur non illustré. La rotation de l'engrenage 32 entraîne le mouvement en translation de la porte coulissante 30 entre deux positions extrêmes, une première position extrême où le volet de mixage obture intégralement le chemin de contournement 28 du deuxième échangeur de chaleur 6 et une seconde position extrême où le volet de mixage 30 obture le passage d'air en aval du deuxième échangeur de chaleur 6 de manière à ce que le flux d'air air ayant traversé le deuxième échangeur de chaleur 6 ne puisse pas accéder à la chambre de mixage 18.

Le volet de mixage 30 tel qu'illustré en [Fig. 2] est agencé en aval du deuxième échangeur de chaleur 6, toutefois, celui peut être agencé entre le premier et le deuxième échangeur de chaleur 4,6.

La porte coulissante du volet de mixage 30 peut comprendre un renfoncement ou autrement dit un évidement ou un retrait. On peut aussi dire que la première porte coulissante 30 a une section de profil en oméga (ou la porte coulissante présente un profilé oméga), ou que la porte coulissante comporte 4 coudes, ou 4 plis. Ce renfoncement a une hauteur, par rapport aux dimensions du volet, située dans un intervalle compris entre [3 ; 30] millimètres, on peut aussi parler de profondeur comprise entre 3 et 30 millimètres. Une telle profondeur garantit qu'un débit suffisant de flux d'air froid puisse aller du premier conduit d'air froid, correspondant à la partie du canal d'écoulement 3 au niveau du chemin de contournement 28, au conduit chaud, correspondant à la partie du canal d'écoulement 3 en aval du deuxième et troisième échangeur de chaleur et assurer ainsi un pré-mélange satisfaisant pour limiter les phénomènes de stratification.

Selon l'invention, le boitier 2 comprend en outre au moins un moyen de fixation 50 à une paroi comprenant une ouverture, le boitier 2 étant apte à être solidarisé à une unique face de cette paroi et à être agencé de part et d'autre de ladite paroi. Autrement dit, le boitier 2 est fixé à la paroi 52 que d'un côté de celle-ci, toutefois le boitier s'étend de part et d'autre de la paroi 52, la paroi 52 comprenant une ouverture pour que le boitier 2 puisse être agencé au travers de la paroi 52 avec une partie d'un côté de la paroi 52 et l'autre partie de l'autre côté de la paroi 52.

La paroi 52 correspond par exemple au tablier du véhicule séparant le compartiment moteur M du compartiment Habitacle H. Comme illustré sur les figures 3 et 4, la partie thermique comprenant l'entrée d'air 10 et les trois échangeurs de chaleur 4,6,7 est agencée d'un côté, ou d'une face, de la paroi 52, notamment du côté compartiment moteur M, tandis que la partie distribution comprenant les conduits de sortie d'air 12,14, 16 est agencée de l'autre côté ou face de la paroi 52. Autrement dit, afin de permettre un échange plus aisé des échangeurs au besoin il est préférable d'agencer les trois échangeurs de chaleurs 4,6,7 d'un même côté de la paroi 52, notamment du côté compartiment moteur.

Selon un mode de réalisation particulier, le deuxième échangeur 6, le troisième échangeur 7 et la chambre de mixage 18 peuvent être agencés partiellement des deux côtés de la paroi 52 comme illustré sur la figure 2 où ici, 90% desdits deux échangeurs de chaleur 6,7 sont agencés du côté compartiment moteur M et 10% du côté compartiment habitacle H. Pour cela, il est préférable que le troisième échangeur de chaleur 7 présente une alimentation filaire, c'est-à-dire une alimentation déportée avec un fil qui alimente le radiateur électrique. L'alimentation, autrement dit le branchement du fil aux cadre support des pierres CTP, est agencé du côté compartiment moteur M, bien qu'il puisse être alimenté du côté compartiment habitacle H selon un autre mode de réalisation.

Le boitier 2 selon l'invention comprend des moyens de fixation 50 pour fixer le boitier 2 à la paroi 52. Les moyens de fixation 50 correspondent à deux éléments de formes complémentaire, un agencé sur le boitier 2 et l'autre sur la paroi 52. A titre d'exemple, un ensemble goujon-oreille peut être utilisé où le goujon est agencé sur la paroi 52 tandis que l'oreille est située sur le boitier 2. A titre alternatif, la paroi 52 peut présenter des ouvertures ou des échancrures et le boitier 2 un ou plusieurs crochets ou tout autre élément en saillie du boitier 2 de forme complémentaire auxdites ouvertures. L'invention ne se limite pas à la nature de la fixation entre la paroi 52 et le boitier 2.

Le boitier 2 comprend de préférence au moins une partie en saillie 54 venant en butée contre une face de la paroi 52 avec éventuellement un joint d'étanchéité en mousse ou en polymère pouvant être agencé entre la paroi 52 et le boitier 2 au niveau de la partie en saillie 54 venant en appui contre la paroi 52. La partie en saillie 54, et donc le joint d'étanchéité 54, s'étendent sur le pourtour, ou la périphérie de l'ouverture de la paroi 52. Les moyens de fixation 50 peuvent être agencés sur la partie en saillie 54. La partie en saillie 54 peut correspondre à une plage d'accostage, ou un flanc d'accostage

La partie en saillie 54 peut être agencée sur le boitier 2 de manière à venir en appui sur la paroi 52 du côté compartiment habitacle H ou du côté moteur M.

Selon un autre mode de réalisation, le boitier 2 peut comprendre un logement ou une encoche dans lequel une extrémité de la paroi 52 est accueillie et vient en butée contre le boitier. Un joint d'étanchéité peut être agencé entre les deux éléments.

Selon le mode de réalisation illustré à la figure 4, l'entrée d'air 10 notamment l'entrée d'air extérieur 35 et l'entrée d'air de recyclage 37 sont agencées en bas ou dans la partie inférieure par rapport à l'axe vertical Z du boitier 2. Autrement dit, l'entrée d'air extérieur 35 et l'entrée d'air de recyclage 37 sont agencées du côté opposé du boitier 2 au premier conduit de sortie d'air 12 menant à la buse de dégivrage. En d'autres termes, l'entrée d'air extérieur 35 et l'entrée d'air de recyclage 37 sont agencées du même côté du boitier 2 au troisième conduit de sortie d'air 16 menant à la buse des pieds.

Afin de permettre l'air de recyclage d'accéder à l'entrée d'air de recyclage 37, le tablier 52 comprend en outre une deuxième ouverture.

De par sa taille réduite en hauteur, ou en Z, grâce à l'agencement des échangeurs de chaleur et à l'utilisation des portes coulissantes, le dispositif de chauffage, ventilation et/ou climatisation selon l'invention est suffisamment plat pour passer à travers l'ouverture du tablier. En effet, de tels ouvertures sont cantonnées à des dimensions précises, généralement entre 180 et 220 mm si bien que des dispositifs de chauffage, ventilation et/ou climatisation traditionnels faisant plus de 300 mm sont soit divisés en deux modules (split HVAC), le tablier participant au canal d'écoulement, soit ne sont agencés uniquement dans le compartiment habitacle H sous la planche de bord. Le boitier 2 selon l'invention permet de restreindre la hauteur aux alentours de 200 - 210 mm si bien qu'il est possible de faire passer une partie du boitier 2 à travers l'ouverture de la paroi 52 et d'avoir une partie, la partie thermique, dans le compartiment moteur M, la partie thermique comprenant notamment les éléments faisaient du bruit tel que le moteur du groupe moto-ventilateur (pulseur) et l'autre partie, la partie distribution dans le compartiment habitacle H.

## Revendications

1. Dispositif (1) de chauffage, ventilation et/ou climatisation pour véhicule automobile, comprenant un boitier (2) définissant un canal d'écoulement (3) pour un flux d'air, dans lequel sont agencés un premier échangeur de chaleur (4), un deuxième échangeur de chaleur (6), le premier (4) et le deuxième (6) échangeurs de chaleur étant inscrits dans des plans sensiblement orthogonaux, un chemin de contournement (28) du deuxième échangeur de chaleur (6) et au moins un conduit de sortie d'air (12,14,16), ledit au moins un conduit de sortie d'air (12,14,16) étant configuré pour guider le flux d'air notamment vers au moins une région d'un habitacle de véhicule, un volet de mixage (30) comprenant une porte coulissante est agencé dans le canal d'écoulement (3) de manière à pouvoir obturer le chemin de contournement (28) et/ou le deuxième échangeur de chaleur (6) , le boitier (2) comprenant en outre au moins un moyen de fixation (50) apte à fixer ledit boitier (2) à une paroi (52) comprenant une ouverture, et en ce que le boitier (2) est apte à être solidarisé à une unique face de cette paroi (52) et à être agencé de part et d'autre de ladite paroi (52), le volet de mixage (30) étant agencé en aval du deuxième échangeur de chaleur (6), **caractérisé en ce que** les deux échangeurs de chaleur (4,6) sont aptes à être agencés d'un même côté de la paroi (52) et ledit au moins un conduit de sortie d'air (12, 14, 16) est apte à être agencé de l'autre côté de la paroi (52), le deuxième échangeur de chaleur étant agencé de manière sensiblement horizontale et que le premier échangeur de chaleur est agencé de manière sensiblement verticale.

2. Dispositif (1) selon la revendication 1, dans lequel le moyen de fixation (50) correspond à deux éléments de formes complémentaire, un premier élément étant agencé sur le boitier (2) et un second élément étant apte à être agencé sur la paroi (52).

3. Dispositif (1) selon la revendication 2, dans lequel le moyen de fixation (50) correspond à un ensemble goujon et oreille.

4. Dispositif (1) selon l'une des revendications 1 à 3, dans lequel un troisième échangeur de chaleur (7) correspondant à un radiateur électrique est agencé en aval, par rapport à l'écoulement d'un flux d'air, du deuxième échangeur de chaleur (6), ledit troisième échangeur de chaleur (6) comprenant une alimentation filaire.

5. Dispositif selon l'une des revendications précédentes, dans lequel le boitier (2) comprend un logement dans lequel une extrémité de la paroi (52) est apte à être accueillie et venir en butée contre le boitier (2).

6. Véhicule automobile **caractérisé en ce qu'**il comprend un dispositif (1) de chauffage, ventilation et/ou climatisation selon l'une des revendications précédentes.

## Patentansprüche

1. Heizungs-, Lüftungs- und/oder Klimaanlage (1) für ein Kraftfahrzeug, umfassend ein Gehäuse (2), das einen Strömungskanal (3) für einen Luftstrom definiert, in dem ein erster Wärmetauscher (4), ein zweiter Wärmetauscher (6), wobei der erste (4) und der zweite (6) Wärmetauscher in im Wesentlichen orthogonalen Ebenen angeordnet sind, einen Umgehungsweg (28) für den zweiten Wärmetauscher (6) und mindestens einen Luftaustrittskanal (12, 14, 16), wobei der mindestens eine Luftaustrittskanal (12, 14, 16) so ausgebildet ist, dass er den Luftstrom insbesondere zu mindestens einem Bereich eines Fahrzeuginnenraums leitet, eine Mischklappe (30) mit einer Schiebetür ist im Strömungskanal (3) so angeordnet, dass sie den Umgehungsweg (28) und/oder den zweiten Wärmetauscher (6) verschließen kann, wobei das Gehäuse (2) ferner mindestens ein Befestigungsmittel (50) aufweist, mit dem das Gehäuse (2) an einer Wand (52) mit einer Öffnung befestigt werden kann, und dass das Gehäuse (2) an einer einzigen Seite dieser Wand (52) befestigt und beiderseits der Wand (52) angeordnet werden kann, wobei die Mischklappe (30) stromabwärts des zweiten Wärmetauschers (6) angeordnet ist, **dadurch gekennzeichnet, dass** die beiden Wärmetauscher (4, 6) auf derselben Seite der Wand (52) angeordnet werden können und der mindestens eine Luftaustrittskanal (12, 14, 16) auf der anderen Seite der Wand (52) angeordnet werden kann, wobei der zweite Wärmetauscher im Wesentlichen horizontal und der erste Wärmetauscher im Wesentlichen vertikal angeordnet ist.

2. Vorrichtung (1) nach Anspruch 1, wobei das Befestigungsmittel (50) zwei komplementär geformten Elementen entspricht, wobei ein erstes Element am Gehäuse (2) angeordnet ist und ein zweites Element an der Wand (52) anbringbar ist.

3. Vorrichtung (1) nach Anspruch 2, wobei die Befestigungseinrichtung (50) einer Bolzen-Ohr-Anordnung entspricht.

4. Vorrichtung (1) nach einem der Ansprüche 1 bis 3, wobei ein dritter Wärmetauscher (7), der einem elektrischen Heizkörper entspricht, in Strömungsrichtung hinter dem zweiten Wärmetauscher (6) angeordnet ist, wobei der dritte Wärmetauscher (7) eine Kabelzuführung aufweist.

5. Vorrichtung nach einem der vorstehenden Ansprüche, wobei das Gehäuse (2) eine Aufnahme aufweist, in der ein Ende der Wand (52) aufgenommen werden und am Gehäuse (2) anliegen kann.

6. Kraftfahrzeug, **dadurch gekennzeichnet, dass** es eine Heizungs-, Lüftungs- und/oder Klimaanlage (1) gemäß einem der vorstehenden Ansprüche umfasst.

## Claims

1. A heating, ventilation, and/or air conditioning device (1) for a motor vehicle, comprising a housing (2) defining a flow channel (3) for a stream of air, in which a first heat exchanger (4) and a second heat exchanger (6) are arranged, the first (4) and second (6) heat exchangers being located in substantially orthogonal planes, a bypass path (28) for the second heat exchanger (6), and at least one air outlet duct (12, 14, 16), said at least one air outlet duct (12, 14, 16) being configured to guide the stream of air, in particular, toward at least one region of a vehicle passenger compartment, a mixing flap (30) comprising a sliding door is arranged in the flow channel (3) so as to be able to close off the bypass path (28) and/or the second heat exchanger (6), the housing (2) further comprising at least one fixing means (50) able to fix said housing (2) to a wall (52) comprising an opening, and in that the housing (2) is able to be secured to a single face of this wall (52) and of being arranged on either side of said wall (52), the mixing flap (30) being arranged downstream of the second heat exchanger (6), **characterized in that** the two heat exchangers (4, 6) are able to be arranged on the same side of the wall (52) and said at least one air outlet duct (12, 14, 16) is adapted to be arranged on the other side of the wall (52), the second heat exchanger being arranged substantially horizontally and the first heat exchanger being arranged substantially vertically.

2. Device (1) according to claim 1, wherein the fixing means (50) comprises two elements with complementary shapes, a first element being arranged on the housing (2) and a second element being able to be arranged on the wall (52).

3. Device (1) according to claim 2, wherein the fixing means (50) corresponds to a bolt and lug assembly.

4. Device (1) according to one of claims 1 through 3, wherein a third heat exchanger (7), corresponding to an electric radiator, is arranged downstream of the second heat exchanger (6) with respect to the flow of a stream of air, said third heat exchanger (6) comprising a wired power supply.

5. Device according to one of the preceding claims, wherein the housing (2) comprises a recess in which an end of the wall (52) is able to be accommodated and abut against the housing (2).

6. A motor vehicle **characterized in that** it comprises a heating, ventilation, and/or air conditioning device (1) according to one of the preceding claims.
